# EUROPÄISCHE PATENTSCHRIFT

(11) **EP 1 181 465 B1**
(45) Veröffentlichungstag und Bekanntmachung des Hinweises auf die Patenterteilung: **13.10.2004**
(21) Anmeldenummer: 01927607.0
(22) Anmeldetag: 27.03.2001
(51) Int. Cl.: F16F 13/14

(54) **GUMMILAGER MIT ABGESTUFTEM DÄMPFUNGSVERHALTEN**
RUBBER BEARING WITH GRADUATED DAMPING BEHAVIOR
SUPPORT ELASTIQUE A COMPORTEMENT D'AMORTISSEMENT GRADUEL

(30) Priorität: 27.03.2000 DE 10014808
(43) Veröffentlichungstag der Anmeldung: 27.02.2002
(73) Patentinhaber: ZF Lemförder Metallwaren AG, 49441 Lemförde (DE)
(72) Erfinder: VOSSEL, Andreas, 49086 Osnabrück (DE); KRAMER, Klaus, 49434 Neuenkirchen (DE)
(86) Internationale Anmeldenummer: PCT/DE2001/001155
(87) Internationale Veröffentlichungsnummer: WO 2001/073315

(56) Entgegenhaltungen:
- DE-A- 4 222 486
- FR-A- 2 555 688
- FR-A- 2 701 299
- GB-A- 2 342 422
- PATENT ABSTRACTS OF JAPAN vol. 010, no. 010 (M-446), 16. Januar 1986 (1986-01-16) & JP 60 172743 A (KINUGAWA GOMU KOGYO KK), 6. September 1985 (1985-09-06)

## Beschreibung

Die Erfindung betrifft ein Gummilager mit abgestuftem Dämpfungsverhalten, welches in an sich bekannter Weise im Wesentlichen aus einem vorzugsweise zylindrischen bzw. annähernd zylindrischen Innenteil, einer rohrförmigen koaxial um das Innenteil angeordneten Außenhülse sowie einem zwischen dem Innenteil und der Außenhülse fest eingeordneten Druckkörper mit Kammern für ein Dämpfungsmittel besteht.

Entsprechend der Vielfältigkeit ihres Einsatzes müssen Gummilager unterschiedlichste Eigenschaften im Hinblick auf ihr Dämpfungsverhalten aufweisen, wobei sie außerdem unterschiedlich stark durch die von ihnen aufgenommenen Kräfte beansprucht werden. Sie werden daher durch eine geeignete Gestaltung ihrer Geometrie und/oder durch die Wahl des Elastomers, aus dem der Druckkörper besteht, für den jeweiligen Verwendungszweck in ihrem Dämpfungsverhalten optimiert. Jedoch ist es wünschenswert, in der Fertigung eine gewisse Flexibilität bei der Bereitstellung von Lagern mit unterschiedlichen Eigenschaften zu erreichen. Auch sind die Lager in ihrem praktischen Einsatz in Bezug auf einwirkende Kräfte häufig dynamisch stark wechselnden Bedingungen unterworfen. Es ist daher bekannt, die Lager konstruktiv so auszubilden, dass sie während der Fertigung auf einfache Weise an den vorgesehenen Einsatzzweck angepasst werden können bzw. dass sie im Hinblick auf ihr dynamisches Dämpfungsverhalten eine bestimmte Breitbandigkeit aufweisen.

Eine Gestaltung eines Gummilagers, welche es ermöglichen soll, dessen elastische Eigenschaften bei der Fertigung auf einfache Weise an unterschiedliche Erfordernisse anzupassen, ist bereits durch die DE 39 09 609 A1 bekannt geworden. In der Schrift wird ein Gummilager beschrieben, bei dem parallel zu dem ersten Druck- bzw. Federkörper ein zweiter Federkörper vorgesehen ist, welcher in einem radialen Abstand von dem ersten Federkörper in dem Spalt zwischen dem Innenteil und der Außenhülse angeordnet ist. Dabei ist der zweite Federkörper zweiteilig in Form eines an beiden Stirnseiten des Lagers vorgesehenen elastomeren Elementes ausgebildet. Eine durch ein flüssiges Dämpfungsmittel unterstützte Dämpfung des Lagers ist gemäß der Lösung nach der Schrift nicht vorgesehen. Auch ist das Lager für den Einsatz zur Dämpfung von Schwingungen mit Amplituden oder Frequenzen in unterschiedlichen Kennlinienbereichen nur bedingt geeignet.

Aus der DE 42 22 486 A1 ist ein hydraulisch dämpfendes Gummilager bekannt, welches eine Schwingungsdämpfung in zwei verschiedenen Frequenzbereichen bewirkt. Hierzu sind in dem Federelement bzw. Druckkörper mehrere mit einer Dämpfungsflüssigkeit gefüllte Kammern ausgebildet. Zwei äußere über einen Kanal flüssigkeitsleitend miteinander verbundene Kammern umgeben gemäß der Lösung eine radial weiter innen gelegene Kammer. Die Kammern sind in ihrer axialen Abfolge gegeneinander durch gummielastische Blähwände begrenzt. Gemäß der Schrift wird durch die innere Kammer eine gute Isolierung höherfrequenter Schwingungen erreicht. Der äußere Bereich des Federelementes wirkt demnach vornehmlich schwingungsdämpfend, der innere hingegen vibrationsisolierend. Als nachteilig ist der vergleichsweise hohe Fertigungsaufwand für ein solches Lager anzusehen. Dies gilt insbesondere im Hinblick auf eine flüssigkeitsdichte Montage der beiden Vulkateile.

Weiterhin ist aus der FR-A―2 701 299 ein Gummilager mit einem abgestuftem Dämpfungsverhalten bekannt, welches im wesentlichen aus einem zylindrischen Innenteil, einer rohrförmigen koaxial um das Innenteil angeordneten Außenhülse sowie einem zwischen dem Innenteil und der Außenhülse fest eingeordneten aus einem Elastomer bestehenden Druckkörper mit Kammern zur Aufnahme eines Dämpfungsmittels besteht. Der Druckörper ist dabei in radialer Richtung durch eine koaxial mit dem Innenteil und der Außenhülse angeordnete metallische Zwischenhülse in zwei für sich abgeschlossene und hinsichtlich ihres Dämpfungsverhaltens unabhängig abstimmbare Dämpfungsbereiche unterteilt. Nachteilig an diesem Lager ist der ebenfalls nur bedingt mögliche Einsatz diese Lagers zur Dämpfung von Schwingungn mit Amplituden oder Frequenzen in unterschiedlichen Kennlinienbereichen.

Aufgabe der vorliegenden Erfindung ist es, unter Vermeidung der Nachteile des Standes der Technik ein Gummilager zu schaffen, welches einen einfachen Aufbau besitzt und durch sein abgestuftes Dämpfungsverhalten in unterschiedlichen Kennungsbereichen eingetragene Kräfte wirkungsvoll dämpft.

Die Aufgabe wird durch ein Lager mit den Merkmalen des Hauptanspruchs gelöst. Vorteilhafte Ausgestaltungen bzw. Weiterbildungen des erfindungsgemäßen Lagers sind durch die Unteransprüche gegeben.

Das Lager gemäß der vorgeschlagenen Lösung besteht in an sich bekannter Weise im wesentlichen aus einem Innenteil zylindrischer oder annähernd zylindrischer Form, einer rohrförmigen koaxial um das Innenteil angeordneten Außenhülse sowie einem zwischen den vorgenannten Teilen fest eingeordneten Druckkörper aus Elastomer mit Kammern zur Aufnahme eines flüssigen Dämpfungsmittels. Der Druckkörper ist in radialer Richtung durch mindestens eine koaxial mit dem Innenteil und der Außenhülse angeordnete Zwischenhülse in mehrere für sich abgeschlossene und hinsichtlich ihres Dämpfungsverhaltens voneinander unabhängig abstimmbare Dämpfungsbereiche unterteilt. Innerhalb beider Dämpfungsbereiche mit Bezug auf die radiale Richtung des Druckkörpers sind Kammern für ein Dämpfungsmittel vorgesehen . Zur Realisierung einer vollständigen Abgeschlossenheit der Dämpfungsbereiche, also eines sich gegenseitig nicht beeinflussenden Dämpfungsverhaltens, besteht dabei aber nur zwischen den Kammern eines Dämpfungsbereiches eine flüssigkeitsleitende Verbindung in Form eines kanals. Zwischen den unterschiedlichen Dämpfungsbereichen ist ein Austausch des Dämpfungsmittels durch die eingeordnete Zwischenhülse nicht möglich.

Entsprechend einer möglichen Ausgestaltung, die beispielsweise zur Lagerung der Querlenker eines Fahrzeugs vorteilhaft einsetzbar ist, weist der innere Dämpfungsbereich eine gegenüber dem äußeren Dämpfungsbereich weichere Kennung auf. Jedoch ist für spezielle Zwecke zur Minderung der Lagerbeanspruchung auch eine entgegengesetzte Auslegung denkbar. Neben der Wahl unterschiedlicher Elastomere zur Ausbildung der Dämpfungsbereiche kann deren unterschiedliches Dämpfungsverhalten auch durch die Verwendung verschiedenartiger Dämpfungsmittel unterschiedlicher Viskosität zur Befüllung ihrer Kammern erreicht werden.

Bei einer besonderen, ebenfalls für spezielle Einsatzzwecke gedachten Ausgestaltungsform des Gummilagers weist zumindest ein Dämpfungsbereich oder beide Dämpfungsbereiche in Bezug auf aus verschiedenen radialen Richtungen eingetragene Kräfte ein unterschiedliches Kennungsverhalten auf. Dies kann je nach dem grundsätzlich gewünschten Dämpfungsverhalten durch eine entsprechende Formgebung des Innenteils oder des elastischen Druckkörpers erreicht werden.

Gemäß einer weiteren Ausgestaltung des erfindungsgemäßen Lagers weisen die Dämpfungsbereiche durch eine entsprechende Bemessung des Elastomers sowie der Zwischen- bzw. Trennhülse oder -hülsen unterschiedliche axiale Längen auf.
Vorzugsweise ist bei einem Lager mit zwei Dämpfungsstufen die äußere Dämpfungsstufe hinsichtlich ihrer axialen Ausdehnung kürzer als die innere.

Das erfindungsgemäße Lager ermöglicht trotz seines vergleichsweise einfachen Aufbaus und der daraus resultierenden einfachen Montage eine wirkungsvolle Abstufung des Dämpfungsverhaltens. Bei einer zur Mitte hin weicheren Kennlinie werden zunächst Stoss- oder Vibrationsbelastungen mit hoher Frequenz und kleiner Amplitude wirkungsvoll durch den inneren Dämpfungsbereich des Lagers gedämpft. Werden die auftretenden Kräfte größer, erhöht sich also ihre Amplitude, so kommt der innere Bereich zum Anschlag. Ohne das Vorhandensein einer zweiten Dämpfungsstufe würde jetzt die Dämpfung ausschließlich durch das Elastomer erfolgen. Zum einen wäre dadurch keine so wirkungsvolle Dämpfung mehr gegeben und zum anderen würde der Druckkörper enorm beansprucht werden. Durch die erfindungsgemäße Ausgestaltung des Lagers wird aber beim Anschlag des inneren Dämpfungsbereiches der äußere mit dem härteren Kennlinienbereich abgestimmte Dämpfungsbereich aktiviert. Durch die völlige Entkopplung beider Dämpfungsbereiche können diese hinsichtlich ihrer Steifigkeiten sehr große Unterschiede aufweisen und jeder für sich auf vorgegebene Frequenzen abgestimmt werden.

Nachfolgend soll die Erfindung anhand eines Ausführungsbeispieles näher erläutert werden. In der zugehörigen zeigen:
- Figur 1:: Das erfindungsgemäße Lager in einer axialen Schnittdarstellung wiedergegeben.
- Figur 2a - 2c:: Die Komponenten des Lagers gemäß Figur 1 vor der Montage in einer axial auseinandergezogenen Darstellung des Lagers.

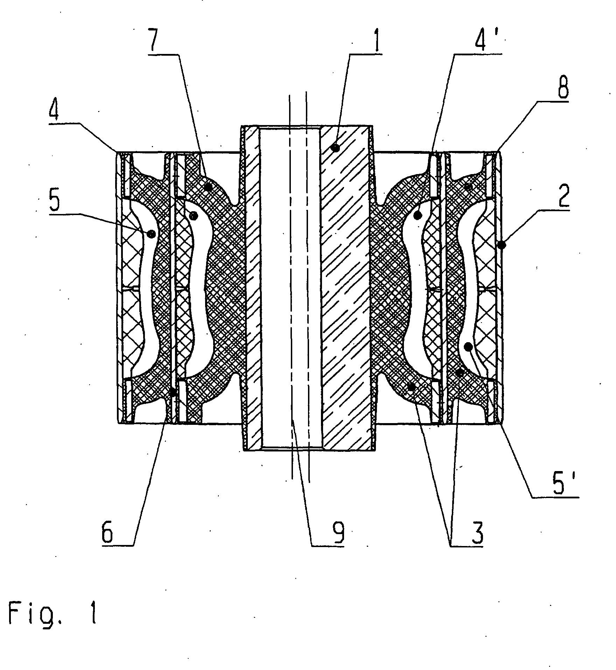

Figur 1 zeigt das erfindungsgemäße Lager in einer axialen Schnittdarstellung. Dem grundsätzlichen Aufbau von Gummilagern entsprechend weist das Lager ein in der Regel metallisches Innenteil 1 auf. Dieses kann je nach Verwendungszweck konzentrisch oder wie in dem wiedergegebenen Beispiel dargestellt, exzentrisch um die Lageraufnahmebohrung 9 verlaufen. Das Innenteil 1 ist koaxial von einer rohrförmigen, ebenfalls im Allgemeinen metallischen Außenhülse 2 umgeben. Zwischen Innenteil 1 und Außenhülse 2 ist der Druckkörper 3 mit Kammern 4, 4', 5, 5' zur Aufnahme eines Dämpfungsmittels fest eingeordnet. Zum Erhalt des abgestuften Dämpfungsverhaltens ist der elastomere Druckkörper 3, aber abweichend vom Stand der Technik, durch eine darin eingeordnete Zwischenhülse 6 in zwei abgeschlossene, voneinander unabhängige Dämpfungsbereiche 7, 8 unterteilt.

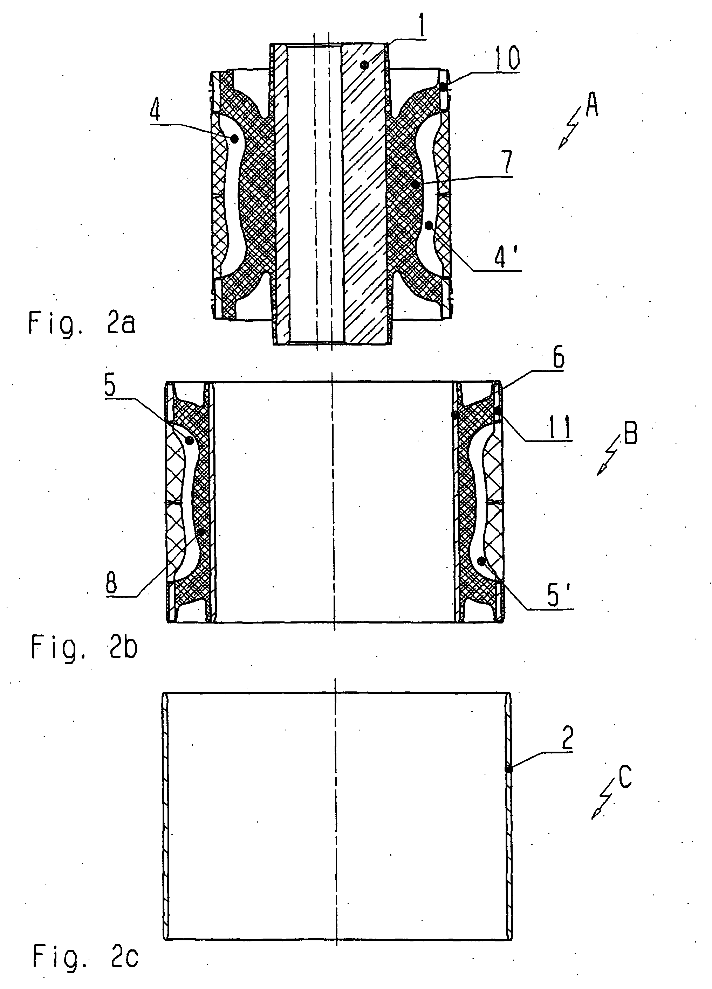

Durch die Figur 2a - 2c wird dieser Aufbau durch eine in axialer Richtung auseinandergezogene Darstellung des Lagers nochmals verdeutlicht. Die einzelnen Komponenten A, B, C und die sich bei der Fertigung des Lagers ergebende Folge der Fertigungsschritte sind hier gut zu erkennen. Zunächst werden das Innenteil 1 und das den späteren inneren Dämpfungsbereich 7 bildende Elastomer unter Ausbildung der zur Aufnahme eines Dämpfungsmittels vorgesehenen Kammern 4, 4' durch Vulkanisation verbunden, wobei diese innere Komponente A, insbesondere im Hinblick auf die spätere Montage, im Zuge der Vulkanisation noch von einem Käfig 10 umschlossen wird. Je nach konstruktiver Gestaltung kann dann später auf die Komponente A, in der Regel axial mittig, ein Kunststoffklipp aufgeschoben werden, der zur Ausbildung speziell ausgeformter Anschlagflächen und/oder als Kanalträger für einen die Kammern 4, 4' verbindenden - hier nicht dargestellten - Kanal dient.

Die Komponente B wird erhalten, indem die der Trennung der späteren Dämpfungsbereiche 7, 8 dienende Zwischenhülse 6 mit dem den Dämpfungsbereich 8 bildenden Elastomer, ebenfalls unter Ausbildung entsprechender Kammern 5, 5', verbunden wird. Auch die Komponente B ist von einem Käfig 11 umschlossen. Je nach konstruktiver Gestaltung kann dann später auf die Komponente B, in der Regel axial mittig, ein Kunststoffklipp aufgeschoben werden, der zur Ausbildung speziell ausgeformter Anschlagflächen und/oder als Kanalträger für einen die Kammern 5, 5' verbindenden - hier nicht dargestellten - Kanal dient.

Die Komponente C wird ausschließlich durch die das gesamte Lager umgebende Außenhülse 2 gebildet. Die einfache Montage des Lagers erfolgt durch Ineinanderpressen der Komponenten A, B, C, wobei die Komponenten A und B zuvor mit dem Dämpfungsmittel befüllt werden. Die unterschiedliche Abstimmung der Dämpfungsbereiche 7, 8 kann dabei in vorteilhafter Weise durch die Verwendung unterschiedlich viskoser Dämpfungsmittel zur Befüllung der Kammer 4, 4' bzw. 5, 5' erreicht werden. Eine Bewegung der Dämpfungsflüssigkeit ist jeweils nur zwischen den Kammern 4, 4' bzw. 5, 5 innerhalb eines Dämpfungsbereiches 7 bzw. 8 möglich.

Wirkt auf das fertigmontierte Lager eine radiale Kraft ein, so wird diese bis zu einer bestimmten maximalen Amplitude bei einer weicheren Abstimmung des inneren Dämpfungsbereiches 7 ausschließlich durch diesen Bereich gedämpft. Erst bei starken Stößen, wie sie beispielsweise im Falle eines Einsatzes des Lagers im Querlenker eines Fahrzeugs beim Bremsen auftreten, schlägt der Druckkörper 3 im inneren Dämpfungsbereich 7 an das Innenteil 1 an. In diesem Moment kommt die Dämpfungswirkung des äußeren auf eine härtere Kennlinie abgestimmten Dämpfungsbereiches zur Wirkung.

### Liste der verwendeten Bezugszeichen

- 1: Innenteil
- 2: Außenhülse
- 3: Druckkörper, Elastomer
- 4, 4': Kammer
- 5, 5': Kammer
- 6: Zwischenhülse, Trennhülse
- 7: Dämpfungsbereich
- 8: Dämpfungsbereich
- 9: Lageraufnahmebohrung
- 10: Käfig
- 11: Käfig

## Patentansprüche

1. Gummilager mit abgestuftem Dämpfungsverhalten, welches im wesentlichen aus einem vorzugsweise zylindrischen Innenteil (1), einer rohrförmigen koaxial um das Innenteil (1) angeordneten Außenhülse (2) sowie einem zwischen dem Innenteil (1) und der Außenhülse (2) fest eingeordneten aus einem Elastomer bestehenden Druckkörper (3) mit Kammern (4, 4', 5, 5') zur Aufnahme eines Dämpfungsmittels besteht, wobei der Druckkörper (3) in radialer Richtung durch mindestens eine koaxial mit dem Innenteil (1) und der Außenhülse (2) angeordnete metallische Zwischenhülse (6) in zumindest zwei für sich abgeschlossene und hinsichtlich ihres Dämpfungsverhaltens voneinander unabhängig abstimmbare Dämpfungsbereiche (7, 8) mit unterschiedlichen Dämpfungseigenschaften unterteilt ist, **dadurch gekennzeichnet, dass** innerhalb beider Dämpfungsbereiche (7, 8) des Druckkörpers (3) Kammern (4, 4', 5, 5') für ein Dämpfungsmittel vorgesehen sind, wobei jeweils die Kammern (4, 4') des einen Dämpfungsbereiches (7) und die Kammern (5, 5') des anderen Dämpfungsbereiches (8) durch einen Kanal flüssigkeitsleitend miteinander verbunden sind.

2. Gummilager nach Anspruche 1, **dadurch gekennzeichnet, dass** der innere Dämpfungsbereich (7) eine gegenüber dem äußeren Dämpfungsbereich (8) weichere Kennung aufweist.

3. Gummilager nach einem der Ansprüche 1 bis 2, **dadurch gekennzeichnet, dass** die Kammern (4, 4', 5, 5') der beiden Dämpfungsbereiche (7, 8) mit Dämpfungsmitteln verschiedener Viskosität befüllt sind.

4. Gummilager nach einem der Ansprüche 1 bis 3, **dadurch gekennzeichnet, dass** ein Dämpfungsbereich oder beide Dämpfungsbereiche (7, 8) in Bezug auf aus verschiedenen radialen Richtungen eingetragene Kräfte ein unterschiedliches Kennungsverhalten aufweisen.

5. Gummilager nach einem der Ansprüche 1 bis 4, **dadurch gekennzeichnet, dass** die Dämpfungsbereiche (7, 8) unterschiedliche axiale Längen besitzen, wobei vorzugsweise der äußere an die Außenhülse (2) angrenzende Dämpfungsbereich (8) die kürzeste axiale Länge aufweist.

## Claims

1. Rubber bearing with graduated damping behaviour, which consists substantially of a preferably cylindrical inner part (1), a tubular outer sleeve (2), which is disposed coaxially about the inner part (1), and a pressure body (3), which is firmly incorporated between the inner part (1) and the outer sleeve (2) and consists of an elastomer, with chambers (4, 4', 5, 5') for holding a damping medium, wherein the pressure body (3) is divided in the radial direction by at least one metallic intermediate sleeve (6), which is disposed coaxially with the inner part (1) and the outer sleeve (2), into at least two self-contained damping regions (7, 8) which can be adapted independently of one another with regard to their damping behaviour and have different damping properties, **characterised in that** chambers (4, 4', 5, 5') for a damping medium are provided within both damping regions (7, 8) of the pressure body (3), wherein the chambers (4, 4') of one damping region (7) and the chambers (5, 5') of the other damping region (8) are in each case connected together via a channel so as to convey fluid.

2. Rubber bearing according to Claim 1, **characterised in that** the inner damping region (7) has a characteristic which is softer than that of the outer damping region (8).

3. Rubber bearing according to either of Claims 1 and 2, **characterised in that** the chambers (4, 4', 5, 5') of the two damping regions (7, 8) are filled with damping media of different viscosity.

4. Rubber bearing according to any one of Claims 1 to 3, **characterised in that** one damping region or both damping regions (7, 8) has/have a different characteristic behaviour in relation to forces which are applied from different radial directions.

5. Rubber bearing according to any one of Claims 1 to 4, **characterised in that** the damping regions (7, 8) have different axial lengths, wherein the outer damping region (8) adjacent to the outer sleeve (2) preferably has the shortest axial length.

## Revendications

1. Support en caoutchouc à comportement d'amortissement graduel, qui est essentiellement constitué d'une partie intérieure (1) de préférence cylindrique, d'une douille extérieure (2) de forme tubulaire disposée coaxialement autour de la partie intérieure (1), ainsi que d'un corps de pression (3) disposé de manière fixe entre la partie intérieure et la douille extérieure (2), constitué d'un élastomère, avec des chambres (4, 4', 5, 5') destinées à recevoir un agent d'amortissement, le corps de pression (3) étant divisé dans la direction radiale par au moins une douille intermédiaire (6) métallique, disposée coaxialement à la partie intérieure (1) et à la douille extérieure (2), en au moins deux zones d'amortissement (7, 8) fermées de manière indépendante et pouvant être accordées indépendamment l'une de l'autre en ce qui concerne leur comportement d'amortissement, dont les propriétés d'amortissement sont différentes, **caractérisé en ce qu'**à l'intérieur des deux zones d'amortissement (7, 8) du corps de pression (3) sont prévues des chambres (4, 4', 5, 5') pour un agent d'amortissement, les chambres (4, 4') d'une zone d'amortissement (7) et les chambres (5, 5') de l'autre zone d'amortissement (8) étant reliées entre elles par un canal de manière à conduire un liquide.

2. Support en caoutchouc selon la revendication 1, **caractérisé en ce que** la zone d'amortissement intérieure (7) présente une caractéristique plus souple que la zone d'amortissement extérieure (8).

3. Support en caoutchouc selon l'une des revendications 1 ou 2, **caractérisé en ce que** les chambres (4, 4', 5, 5') des deux zones d'amortissement (7, 8) sont remplies d'agents d'amortissement de viscosité différente.

4. Support en caoutchouc selon l'une des revendications 1 à 3, **caractérisé en ce qu'**une zone d'amortissement ou les deux zones d'amortissement (7, 8) présentent un comportement caractéristique différent par rapport à des forces introduites depuis différentes directions radiales.

5. Support en caoutchouc selon l'une des revendications 1 à 4, **caractérisé en ce que** les zones d'amortissement (7, 8) présentent des longueurs axiales différentes, la zone d'amortissement (8) extérieure, adjacente à la douille extérieure (2), présentant de préférence la longueur axiale la plus courte.
